# EUROPEAN PATENT SPECIFICATION

(11) **EP 0 613 147 B1**
(45) Date of publication and mention of the grant of the patent: **04.08.1999**
(21) Application number: 93830080.3
(22) Date of filing: 26.02.1993
(51) Int. Cl.: G11C 5/00

(54) **Circuit structure with distributed registers connected to serial interface circuit means through data and address transmission buses**
Schaltkreisbeschaffenheit mit verteilten Registern, die zu seriellen Schnittstellen durch Daten und adressenversendende Schienen verbunden sind
Structure de circuits comprenant des registres distribués, connectés par une interface sérielle, à des bus de transmission d'adresses et de données

(43) Date of publication of application: 31.08.1994
(73) Proprietor: STMicroelectronics S.r.l., 20041 Agrate Brianza (Milano) (IT)
(72) Inventor: Alini, Roberto, I-27049 Stradella (PV) (IT); Moloney, David, I-20010 Cornaredo (MI) (IT); Gornati, Silvano, I-20010 Casorezzo (MI) (IT); Portaluri, Salvatore, I-27100 Pavia (IT)
(74) Representative: Botti, Mario

(56) References cited:
- FR-A- 2 674 654
- IEEE JOURNAL OF SOLID-STATE CIRCUITS. vol. 16, no. 3, June 1981, NEW YORK US pages 190 - 194 MEUSBURGER '1.5 V 1K CMOS RAM WITH ONLY 8 PINS'
- IEEE JOURNAL OF SOLID-STATE CIRCUITS. vol. 16, no. 5, October 1981, NEW YORK US pages 479 - 487 REESE ET AL. 'A 4K BY 8 DYNAMIC RAM WITH SELF REFRESH'

## Description

This invention relates to shared register circuit structures, in particular to such circuit structures coupled to data transmission lines through interfacing circuit means of the serial type for use in storage systems or microprocessors.

Many integrated circuit applications require a variety of registers which may be configured for operation in different modes.

Such registers receive usually input data from an interface of the serial type, rather than parallel, in order to reduce the amount of area occupied and the number of external terminals for the devices.

Interface circuit means of the serial type are then operated to address each transmitted data bit into the appropriate register.

Thus, provided within the integrated circuit are shift register circuit means operative to store both the addresses and the data, as well as transmission paths of the parallel type whereby the data can be written into specified registers in accordance with the addresses.

The number of such transmission paths of the parallel type required to write the data into registers to which it has been addressed is both dependent on the number of the data registers and the number of bits used to encode the data, and in an integrated circuit involves occupation of large amounts of integration area, if data reliability and safety are to be ensured.

This reflects heavily on costs being proportional to the integration area in the instance of integrated circuit devices.

Attendant to the unfavorable occupation of integration area is then a problem of speed in data reading from the registers, because such reading is to be carried out in two discrete steps: a first step of address decoding, and a second step of actual data reading from a register to which the read operation has been addressed.

During the write operation address decoding and data writing in a specified register take place in parallel.

The highest rate of operation in a conventional multi-register system is, therefore, the inverse of the sum of the times required to decode a register address and then read the data from the selected memory cell.

An example of shared register circuit structure containing a plurality of registers and coupled to transmission lines by interfacing circuit means of the serial type based on transferring data after addresses on same lines as indicated in the preamble of claim 1 is disclosed in the IEEE JOURNAL OF SOLID-STATE CIRCUITS, vol. 16, no. 3, June 1981, p. 190-194.

The underlying technical problem of this invention is to provide a shared register circuit structure, including an interface of the serial type for coupling to data transmission lines, which allows the integration area requirements to be cut down significantly, while affording a higher rate of operation.

This technical problem is solved by a shared register circuit structure as specified in Claim 1 being characterized in that it comprises transmission lines, from the interface to the registers, used both for the addresses and the data.

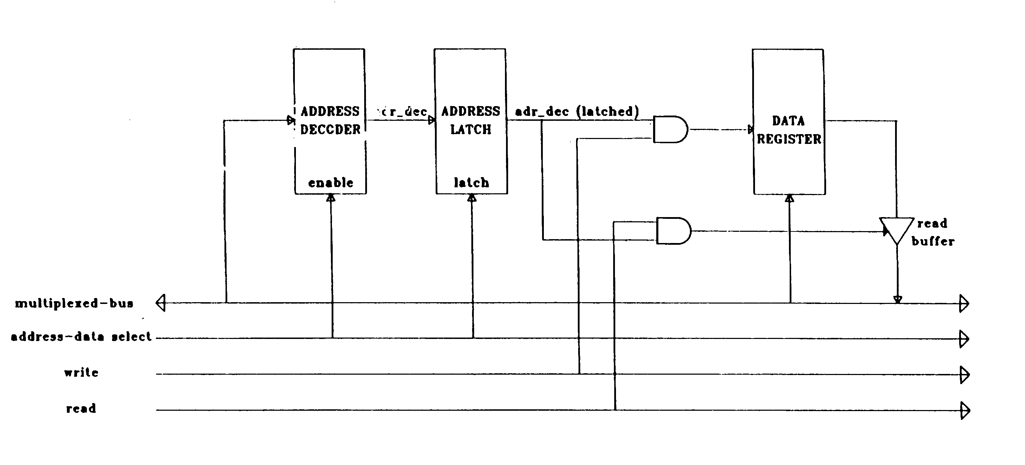

The features and advantages of a shared register circuit structure according to the invention will become apparent from the following description of an embodiment thereof, given by way of example and not of limitation with reference to the accompanying drawing.

The drawing single figure is a diagram of one of the data storage blocks which are contained in a shared register circuit structure according to the invention.

The shared register circuit structure of this invention exploits the fact that, in many integrated circuit storage systems or microprocessors having an interface of the serial type for coupling to data transmission lines, the data address is made available before the data is stored.

A major feature of the inventive circuit structure is that it includes a bundle of data and address transmission lines in each of said linking lines between the serial-type interface and the individual registers.

From a physical standpoint one and the same lead is used to transmit both data and addresses within the integrated circuit. This circuit structure further includes at least one select signal transmission line for the purpose of drawing a distinction between the addresses and the data being transmitted over said bundle of lines.

Assuming a system wherein the addresses are coded with "m" bits and the data with "n" bits, a conventional shared register circuit structure would have n+m parallel transmission lines between the serial interface and the data registers.

The circuit structure of this invention, on the contrary, only requires n+1 or m+1 transmission lines, according to whether the number of address bits or the number of data bits is greater. The extent of area reduction in an integrated circuit is obviously quite appreciable.

For the system to operate effectively, it is necessary, as already mentioned, that an address be made available ahead of the data and that the address can be stored somehow during the successive data transmission.

The most effective method of storing the address information without physically providing an additional address register for each data register, and hence without the system hardware having to be duplicated, is to decode the address from the very moment when the address/data control signal indicates that the address and data information is being transmitted over the address and data transmission lines, and to only store the output state of the decoder, not the address.

That is to say, an address decoder structure should be provided which has a decoded address memory.

All the address decoders in the system will store the decoded state and hold it until the address/data select signal indicates that a new address is being transmitted.

From a logic standpoint, there may either be a single address decoder with as many outputs as the data storage registers are, or as many single-output decoders as the data registers are.

The selection of the appropriate decoding and storing levels is a matter of design and optimization of a device. According to the invention, in view of the integration area actually occupied and the operation speed, the provision of as many decoders with storage facilities as are the data registers appears to be the more convenient approach.

The diagram in the drawing figure shows, in fact, one of the data storage blocks to be obtained when an address decoder with storage facilities is introduced in the structure for each register.

The data register has its input terminal connected to a bundle of transmission lines both for addresses and data, or multiplexed bus, and output terminals for connection to data read circuit means, also connected to the transmission bus.

The bus and said input and output terminals are represented, for simplicity, by a single line and individual input and output terminals.

Also connected to the multiplexed bus are the input terminals of an address decoder, again represented by a single input terminals.

As mentioned above, in this instance of several data storage blocks, the address decoder can have a single output terminal which is connected to a decoded address storage register, or address latch, operative to store only the output state of the decoder.

The decoder and decoded address latch have respectively an enable terminal and a latch terminal which are both connected to a select signal transmission line and activate the decoder and latch upon an address being transmitted over the multiplexed bus.

The output state of the address decoder will be held in storage until another address is transmitted over the multiplexed bus.

The output signal from the decoded address latch is effective to enable writing in the register of the data which is transmitted after the address, but only if the decoded address is that of the data storage register specified.

The data storage register has a command terminal connected to the output terminal of the decoded address latch and to a "write" line for transmitting data write signals through a logic gate of the AND type; it is only when the transmitted address is that of the data register shown in the drawing, that the write command signal will cause the data to be written in the register.

Connected between the output terminal of the data register and the multiplexed bus are, as above mentioned, circuit means for reading data from the register effective to relay the data through the multiplexed bus.

These data read circuit means have an enable terminal which is also connected to the output terminal of the decoded address latch and to a "read" line for transmitting data read signals through a logic gate of the AND type; it is only when the transmitted address is that of the data register shown in the drawing, that the read command signal will cause the data to be read from the register.

It will be appreciated that the AND gating may be implemented by equivalent logic forms, in appropriate manner well known to the persons of skill in this art.

Also, the storage blocks shown in the drawing may be implemented in some other forms known to the skilled ones, contingent on individual application and performance requirements, in general using bistable multivibrators.

Specially useful in this respect is an integration of the VLSI type in CMOS technology, for example, which allows the connection areas between iterative-type cells to be minimized using, inter alia, circuit techniques of the dynamic type.

Different techniques may also be used for the multiplexed bus, such as that known in the art as the precharged-bus technique.

To generate the required command signals for perfectly timed operations, the register architecture may easily be arranged to be self-timed.

While one embodiment of the invention has been described and illustrated, changes and modifications may be made thereunto within the scope of this inventive concept.

## Claims

1. A shared register circuit structure containg a plurality of registers (DATA REGISTER) and coupled to transmission lines (multiplexed-bus) by interfacing circuit means of the serial type based on transferring data after addresses on same transmission lines, and wherein the registers are connected to said interfacing circuit means by a bundle of said transmission lines for transmitting said addresses and data, characterized in that said addresses are register addresses for selecting a desired one of said registers and that said register addresses are latched to hold said desired register selected up to the end of the data transfer started subsequent to the transfer of the register address.

2. A circuit structure according to Claim 1, characterized in that it comprises at least one transmission line for address and data select signals.

3. A circuit structure according to Claim 2, characterized in that it comprises at least one address decoder and an address latch for the addresses decoded by the address decoder, said address decoder having input terminals connected to at least some of the transmission lines and at least one enable terminal connected to a select signal transmission line, said latch having at least one input terminal connected to the address decoder, at least one command terminal connected to the select signal transmission line, and at least one output terminal coupled to a command terminal of at least one of the registers connected to the interfacing circuit means by the transmission lines.

4. A circuit structure according to Claim 2, characterized in that it comprises at least one address decoder and an address latch for the addresses decoded by the address decoder, said address decoder having input terminals connected to at least some of the transmission lines and at least one enable terminal connected to a select signal transmission line, said latch having at least one input terminal connected to the address decoder, at least one command terminal connected to a second select signal transmission line and at least one output terminal coupled to a command terminal of at least one of the registers connected to the interfacing circuit means through the transmission lines.

5. A circuit structure according to Claim 2, characterized in that it comprises a plurality of data storage blocks, each including one of the registers connected to the interfacing circuit means by the transmission lines, an address decoder and an address latch for the decoded addresses by the address decoder, said address decoder having input terminals connected to at least some of the transmission lines and at least one enable terminal connected to a select signal transmission line, said latch having at least one input terminal connected to the address decoder, at least one command terminal connected to a second select signal transmission line and at least one output terminal coupled to a command terminal of at least one of the registers connected to the interfacing circuit means by the transmission lines.

6. A circuit structure according to Claim 5, characterized in that each of the data storage blocks includes a first command circuit means having at least first and second input terminals respectively connected to the output terminal of the latch and to a transmission line for data write command signals, and at least one output terminal connected to the command terminal of that register, contained in said block, which is connected to the interfacing circuit means by the transmission lines.

7. A circuit structure according to Claim 5, characterized in that each of the data storage blocks includes data read circuit means having at least one input terminal connected to that register, contained in said block, which is connected to the interfacing circuit means and at least one output terminal connected to said transmission lines, and at least one enable terminal connected to an output terminal of a second command circuit means, having at least first and second input terminals respectively connected to the output terminal of the latch and to a transmission line for data read command signals.

8. A circuit structure according to Claim 7, characterized in that the first and second command circuit means are logic gate circuits of the AND type.

## Patentansprüche

1. Gemeinsam benutzte Registerschaltungsstruktur mit mehreren Registern (Datenregister), und angeschlossen an Übertragungsleitungen (Multiplex-Bus) mit Hilfe einer Schnittstellenschaltungseinrichtung vom seriellen Typ, basierend auf der Übertragung von Daten nach Adressen über dieselben Übertragungsleitungen, wobei die Register an die Schnittstellenschaltungseinrichtung über eine Gruppe der Übertragungsleitungen zum Übertragen der Adressen und der Daten angeschlossen ist, dadurch gekennzeichnet, daß die Adressen Registeradressen für die Auswahl eines gewünschten Registers aus den Registern sind, und daß die Registeradressen zwischengespeichert werden, um das gewünschte Register bis hin zum Ende des Datentransfers, der im Anschluß an den Transfer der Registeradresse begonnen wird, ausgewählt zu halten.

2. Schaltungsstruktur nach Anspruch 1, dadurch gekennzeichnet, daß sie mindestens eine Übertragungseinleitung für Adressen- und Daten-Auswahlsignale aufweist.

3. Schaltungsstruktur nach Anspruch 2, dadurch gekennzeichnet, daß sie mindestens einen Adressendecoder und einen Adressen-Zwischenspeicher für durch den Adressendecoder decodierte Adressen enthält, wobei der Adressendecoder Eingangsanschlüsse aufweist, die an zumindest einige der Übertragunksleitungen angeschlossen sind, und mindestens einen Freigabeanschluß aufweist, der mit einer Auswahlsignal-Übertragungsleitung verbunden ist, wobei der Zwischenspeicher mindestens einen Eingangsanschluß aufweist, der mit dem Adressendecoder verbunden ist, mindestens einen Befehlsanschluß aufweist, der mit der Auswahlsignal-Übertragungsleitung verbunden ist, und mindestens einen Ausgangsanschluß besitzt, der mit einem Befehlseingang von mindestens einem der Register gekoppelt ist, die mit der Schnittstellenschaltungseinrichtung über die Übertragungsleitungen verbunden sind.

4. Schaltungsstruktur nach Anspruch 2, dadurch gekennzeichnet, daß sie mindestens einen Adressendecoder und einen Adressen-Zwischenspeicher für die von dem Adressendecoder decodierten Adressen aufweist, wobei der Adressendecoder Eingangsanschlüsse aufweist, die mit zumindest einigen der Übertragungsleitungen verbunden sind, und mindestens einen Freigabeanschluß aufweist, der mit einer Auswahlsignal-Übertragungsleitung verbunden ist, wobei der Zwischenspeicher mindestens einen Eingangsanschluß aufweist, der mit dem Adressendecoder verbunden ist, mindestens einen Befehlsanschluß enthält, der mit einer zweiten Auswahlsignal-Übertragungsleitung verbunden ist, und mindestens einen Ausgangsanschluß besitzt, der mit einem Befehlsanschluß von mindestens einem der Register gekoppelt ist, die über die Übertragungsleitungen mit der Schnittstellenschaltungseinrichtung verbunden sind.

5. Schaltungsstruktur nach Anspruch 2, dadurch gekennzeichnet, daß sie mehrere Datenspeicherblöcke enthält, die jeweils eines der Register enthalten, die über die Übertragungsleitungen mit der Schnittstellenschaltungseinrichtung verbunden sind, einen Adressendecoder und einen Adressen-Zwischenspeicher für die von dem Adressendecoder decodierten Adressen enthält, wobei der Adressendecoder Eingangsanschlüsse besitzt, die an mindestens einige der Übertragungsleitungen angeschlossen sind, und mindestens einen Freigabeanschluß enthält, der an eine Auswahlsignal-Übertragungsleitung angeschlossen ist, wobei der Zwischenspeicher mindestens einen Eingangsanschluß besitzt, der an den Adressendecoder angeschlossen ist, mindestens einen Befehlsanschluß enthält, der an eine zweite Auswahlsignal-Übertragungsleitung angeschlossen ist, und mindestens einen Ausgangsanschluß besitzt, der mit einem Befehlsanschluß mindestens eines der Register gekoppelt ist, die über die Übertragungsleitungen mit der Schnittstellenschaltungseinrichtung verbunden sind.

6. Schaltungsstruktur nach Anspruch 5, dadurch gekennzeichnet, daß jeder der Datenspeicherblöcke aufweist: eine erste Befehlsschaltungseinrichtung mit mindestens einem ersten und einem zweiten Eingangsanschluß, die an den Ausgangsanschluß des Zwischenspeichers bzw. an eine Übertragungsleitung für Daten-Schreibbefehlssignale angeschlossen sind, und mindestens einen Ausgangsanschluß, der an den Befehlsanschluß des in dem Block enthaltenen Registers angeschlossen ist, der über die Übertragungsleitungen an die Schnittstellenschaltungseinrichtungen angeschlossen ist.

7. Schaltungsstruktur nach Anspruch 5, dadurch gekennzeichnet, daß jeder der Datenspeicherblöcke eine Datenleseschaltungseinrichtung mit mindestens einem Eingangsanschluß enthält, der an das in jenem Block enthaltene Rcgister anschlossen ist, welcher an die Schnittstellenschaltungseinrichtung angeschlossen ist, und mindestens einen Ausgangsanschluß enthält, der an die Übertragungsleitungen angeschlossen ist, und mindestens einen Freigabeanschluß besitzt, der an einen Ausgangsanschluß einer zweiten Befehlsschaltungseinrichtung angeschlossen ist, und mindestens einen ersten und einen zweiten Eingangsanschluß besitzt, die an den Ausgangsanschluß des Zwischenspeichers bzw. an eine Übertragungsleitung für Daten-Lesebefehlssignale angeschlossen sind.

8. Schaltungsstruktur nach Anspruch 7, dadurch gekennzeichnet, daß die erste und die zweite Befehlsschaltungseinrichtung Logikgatter-Schaltungen vom UND-Typ sind.

## Revendications

1. Structure de circuit à registres partagés, contenant une pluralité de registres (REGISTRE DE DONNÉES), et couplée à des lignes de transmission (BUS MULTIPLEXÉ) par un circuit d'interface de type série basé sur le principe de transférer des données après des adresses sur des mêmes lignes de transmission, et dans laquelle les registres sont connectés audit circuit d'interface par un faisceau de lignes de transmission pour transmettre lesdites adresses et données, caractérisée en ce que lesdites adresses sont des adresses de registre destinées à sélectionner un registre désiré parmi lesdits registres et en ce que lesdites adresses de registre sont verrouillées pour maintenir sélectionné ledit registre désiré jusqu'à la fin du transfert de données qui a commencé postérieurement au transfert de l'adresse de registre.

2. Structure de circuit selon la revendication 1, caractérisée en ce qu'elle comprend au moins une ligne de transmission pour les signaux de sélection d'adresses et de données.

3. Structure de circuit selon la revendication 2, caractérisée en ce qu'elle comprend au moins un décodeur d'adresses et un circuit de verrouillage d'adresse pour les adresses décodées par le décodeur d'adresses, ledit décodeur d'adresses ayant des bornes d'entrée connectées à au moins quelques unes des lignes de transmission et au moins une borne de validation connectée à une ligne de transmission de signal de sélection, ledit circuit de verrouillage ayant au moins une borne d'entrée connectée au décodeur d'adresses, au moins une borne de commande connectée à la ligne de transmission de signal de sélection, et au moins une borne de sortie couplée à une borne de commande d'au moins un des registres connectés au circuit d'interface par les lignes de transmission.

4. Structure de circuit selon la revendication 2, caractérisée en ce qu'elle comprend au moins un décodeur d'adresses et un circuit de verrouillage d'adresse pour les adresses décodées par le décodeur d'adresses, ledit décodeur d'adresses ayant des bornes d'entrée connectées à au moins quelques unes des lignes de transmission et au moins une borne de validation connectée à une ligne de transmission de signal de sélection, ledit circuit de verrouillage ayant au moins une borne d'entrée connectée au décodeur d'adresses, au moins une borne de commande connectée à une seconde ligne de transmission de signal de sélection, et au moins une borne de sortie couplée à une borne de commande d'au moins un des registres connectés au circuit d'interface par l'intermédiaire des lignes de transmission.

5. Structure de circuit selon la revendication 2, caractérisée en ce qu'il comprend une pluralité de blocs de stockage de données, comprenant chacun un des registres connectés au circuit d'interface par les lignes de transmission, un décodeur d'adresses et un circuit de verrouillage d'adresse pour les adresses décodées par le décodeur d'adresses, ledit décodeur d'adresses ayant des bornes d'entrée connectées à au moins quelques unes des lignes de transmission et au moins une borne de validation connectée à une ligne de transmission de signal de sélection, ledit circuit de verrouillage ayant au moins une borne d'entrée connectée au décodeur d'adresses, au moins une borne de commande connectée à une seconde ligne de transmission de signal de sélection, et au moins une borne de sortie couplée à une borne de commande d'au moins un des registres connectés au circuit d'interface par les lignes de transmission.

6. Architecture de circuit selon la revendication 5, caractérisée en ce que chacun des blocs de stockage de données comprend un premier circuit de commande ayant au moins des première et seconde bornes d'entrée connectées respectivement à la borne de sortie du circuit de verrouillage et à une ligne de transmission des signaux de commande d'écriture de données, et au moins une borne de sortie connectée à la borne de commande du registre contenu dans ledit bloc, qui est connecté au circuit d'interface par les lignes de transmission.

7. Structure de circuit selon la revendication 5, caractérisée en ce que chacun des blocs de stockage de données comprend un circuit de lecture de données ayant au moins une borne d'entrée connectée au registre, contenu dans ledit bloc, qui est connecté au circuit d'interface et au moins une borne de sortie connectée auxdites lignes de transmission, et au moins une borne de validation connectée à une borne de sortie d'un second circuit de commande, ayant au moins des première et seconde bornes d'entrée connectées respectivement à la borne de sortie du circuit de verrouillage et à la ligne de transmission des signaux de commande de lecture de données.

8. Architecture de circuit selon la revendication 7, caractérisée en ce que les premier et second circuits de commande sont des circuits de portes logiques de type ET.
